(19) Europäisches Patentamt
European Patent Office
Office européen des brevets

(11) Veröffentlichungsnummer: **0 311 949 B1**

(12) **EUROPÄISCHE PATENTSCHRIFT**

(45) Veröffentlichungstag der Patentschrift: **19.01.94**

(51) Int. Cl.$^5$: **C09B 29/33**, C09D 11/00

(21) Anmeldenummer: **88116772.0**

(22) Anmeldetag: **10.10.88**

Die Akte enthält technische Angaben, die nach dem Eingang der Anmeldung eingereicht wurden und die nicht in dieser Patentschrift enthalten sind.

# (54) Wasserlösliche gelbe Monoazofarbstoffe.

(30) Priorität: **16.10.87 DE 3735078**

(43) Veröffentlichungstag der Anmeldung:
**19.04.89 Patentblatt 89/16**

(45) Bekanntmachung des Hinweises auf die Patenterteilung:
**19.01.94 Patentblatt 94/03**

(84) Benannte Vertragsstaaten:
**CH DE ES FR GB IT LI**

(56) Entgegenhaltungen:
**EP-A- 0 005 449**

(73) Patentinhaber: **CASSELLA Aktiengesellschaft**
**Hanauer Landstrasse 526**
**D-60386 Frankturt(DE)**

(72) Erfinder: **Bauer, Wolfgang, Dr.**
**Masurenstrasse 6**
**D-6457 Maintal 3(DE)**
Erfinder: **Steckelberg, Willi, Dr.**
**Goldgrabenstrasse 24**
**D-6238 Hofheim(DE)**
Erfinder: **Ritter, Josef, Dr.**
**Berliner Strasse 12**
**D-6238 Hofheim(DE)**

(74) Vertreter: **Urbach, Hans-Georg, Dr. et al**
**Hanauer Landstrasse 526**
**D-60386 Frankturt (DE)**

EP 0 311 949 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wasserlösliche gelbe Monoazofarbstoffe der Formel I

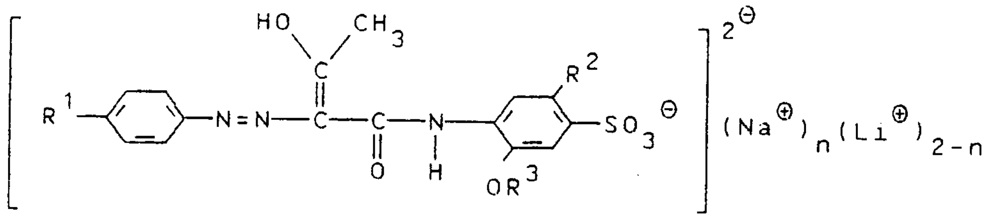

(I)

worin

$R^1$

den Rest

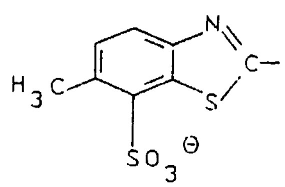

oder den Rest

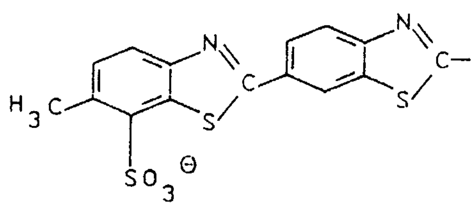

$R^2$ Methyl, Ethyl, Methoxy oder Ethoxy,
$R^3$ Methyl oder Ethyl,
n eine Zahl von 0,3 bis 1,7
bedeuten.

Die Erfindung betrifft ferner ein Verfahren zur Herstellung der Farbstoffe der Formel I und ihre Verwendung zur Herstellung von Aufzeichnungsflüssigkeiten, insbesondere für das Tintenstrahl-Druckverfahren, sowie diese Aufzeichnungsflüssigkeiten.

Aufzeichnungsflüssigkeiten oder Schreibflüssigkeiten werden auch als Tinten bezeichnet. Sie werden beispielsweise in Tintenkugelschreibern, Faserschreibern, Füllfederhaltern, in mechanischen Registrierschreibern oder bei dem sogenannten Tintenstrahl-Druckverfahren verwendet.

Das Tintenstrahl-Druckverfahren, englisch: ink jet printing, ist z.B. beschrieben in: Ullmanns Encyklopädie der Technischen Chemie: 4. Auflage, Bd.23, (1983), 262-264, und Kirk-Othmer Encyclopedia of Chemical Technology, 3rd Edition, Vol 20, (1982), 153-156. Es stellt ein berührungsloses Druckverfahren dar, bei dem Tröpfchen einer Schreibflüssigkeit aus einer Düse oder mehreren Düsen auf die zu bedruckende Unterlage gespritzt werden.

Eine Aufzeichnungsflüssigkeit besteht im Prinzip aus einem löslichen Farbstoff, der in einem Lösungsmittel, meist Wasser, oder in einem Lösungsmittelgemisch gelöst ist. Die Lösung enthält in der Regel noch weitere Hilfsmittel, wie z.B. oberflächenaktive Substanzen, Feuchthaltemittel und/oder Konservierungsmittel.

An Aufzeichnungsflüssigkeiten für das Tintenstrahl-Druckverfahren werden höchste Anforderungen bezüglich Reinheit und Partikelfreiheit gestellt. Insbesondere dürfen sie bei einem Stillstand der Düse an der Düsenöffnung keine Korrosion oder Viskositätsänderung bewirken oder gar antrocknen und auch über

längere Zeit nicht verkrusten. Diese und andere Forderungen bedingen, daß die zur Herstellung von Aufzeichnungsflüssigkeiten benutzten Farbstoffe praktisch keine Salze oder Stellmittel enthalten dürfen.

Die ursprünglich für das Färben und Bedrucken von Textilmaterialien hergestellten Farbstoffe enthalten üblicherweise von der Herstellung her beträchtliche Mengen an Salzen, wie z.B. Natriumsulfat, Natriumacetat, insbesondere aber Natriumchlorid. Oft werden bei Textilfarbstoffen derartige Salze auch noch nach der Synthese als Streck- oder Stellmittel zugesetzt.

Normale salzhaltige Farbstoffe sind zur Herstellung von Aufzeichnungsflüssigkeiten für das Tintenstrahl-Druckverfahren nicht geeignet. Die für die Herstellung von Aufzeichnungsflüssigkeiten für das Tintenstrahlverfahren vorgesehenen Farbstoffe müssen daher zuerst aufwendigen und kostspieligen Reinigungsoperationen unterworfen werden, wie sie z.b. in DE-A 35 39 727 beschrieben sind.

Durch die vorliegende Erfindung werden leicht zugängliche salzarme Farbstoffe zur Verfügung gestellt, die in Form von Aufzeichnungsflüssigkeiten hervorragend auch für das Tintenstrahl-Druckverfahren geeignet sind. Das erfindungsgemäße Verfahren zur Herstellung der Farbstoffe ist wirtschaftlich und ökologisch vorteilhaft. Es liefert direkt, d.h. ohne eine nachträgliche Reinigungsoperation, Farbstoffe, die in Form von Aufzeichnungsflüssigkeiten beim Tintenstrahl-Druckverfahren eingesetzt werden können.

Die erfindungsgemäßen Farbstoffe der Formel I stellen gemischte Natrium- und Lithiumsalze von Farbsäuren dar, die zwei Sulfogruppen im Molekül enthalten. Demgemäß beträgt die Summe der im Molekül vorhandenen Natrium- und Lithiumionen zwei, wobei entsprechend der Bedeutung von n die Zahl der Natriumionen 0,3 bis 1,7 und die Zahl der Lithiumionen 1,7 bis 0,3 betragen kann.

Von den Farbstoffen der Formel I sind diejenigen bevorzugt, bei denen n die Zahl 1 bedeutet und/oder $R^1$ den Rest

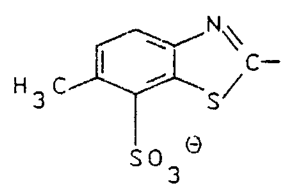

und $R^2$ Methyl und $R^3$ Methyl bedeuten.

Die erfindungsgemäßen Farbstoffe der Formel I werden nach dem erfindungsgemäßen Verfahren dadurch hergestellt, daß im wäßrigen Medium eine Diazokomponente der allgemeinen Formel II

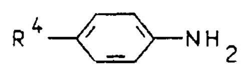

(II)

worin

$R^4$ den Rest

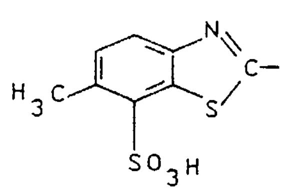

oder den Rest

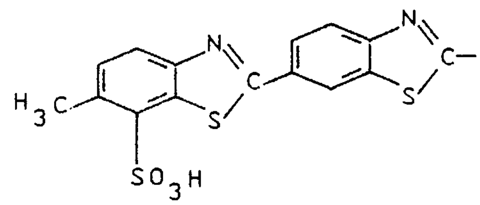

bedeutet, durch Zugabe von $MeNO_2$, wobei Me Na oder Li oder ein Gemisch aus Na und Li bedeutet, diazotiert und auf eine Kupplungskomponente der allgemeinen Formel III

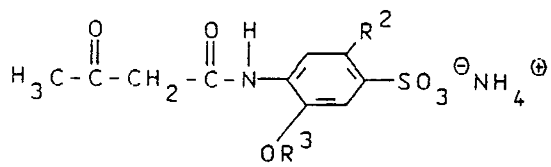
(III)

worin $R^2$ und $R^3$ die bereits genannten Bedeutungen besitzen, gekuppelt wird und daß anschließend in der Lösung mit $Me^1OH$ und/oder $(Me^2)_2CO_3$, wobei $Me^1$ und $Me^2$ Na oder Li oder ein Gemisch aus Na und Li bedeuten, ein pH-Wert von 7 bis 10, vorzugsweise 7 bis 9, und ganz besonders bevorzugt von 7,5 bis 8,5, eingestellt wird und dann der in der Lösung vorhandene Ammoniak durch Destillation entfernt wird.

Die Diazotierungs- und Kupplungsreaktion wird im wäßrigen Medium normalerweise bei Temperaturen von -10° bis +50°C, vorzugsweise 0 bis 20°C, durchgeführt.

Als Reaktionsmedium wird Wasser oder ein Gemisch aus Wasser und einem oder mehreren mit Wasser mischbaren organischen Lösungsmittel(n) verwendet. Als wäßriges Reaktionsmedium ist ein Gemisch aus Wasser und einem einwertigen, leicht regenerierbaren Alkohol oder mehreren derartigen Alkoholen besonders bevorzugt. Als leicht regenerierbare, d.h. leicht abdestillierbare Alkohole kommen insbesondere Methanol, Ethanol und Isopropanol in Betracht. Falls das wäßrige Reaktionsmedium neben Wasser Lösungsmittel enthält, wird dieses vor oder nach der Zugabe des $Me^1OH$ und/oder $(Me^2)_2CO_3$ durch Abdestillation, gegebenenfalls unter vermindertem Druck, entfernt.

Es ist besonders zweckmäßig, die Diazotierung und Kupplung so durchzuführen, daß die Kupplungskomponente der Formel III und die Diazokomponente der Formel II im Molverhältnis 1 : 1 im wäßrigen Reaktionsmedium vorgelegt werden und zu dieser Mischung eine äquivalente Menge des $MeNO_2$ hinzugefügt wird. Der pH-Wert stellt sich dann auf einen Bereich von 2,5 bis 5 ein. Das $MeNO_2$ wird dabei, wie später auch das $Me^1OH$ und/oder $(Me^2)_2CO_3$, zweckmäßigerweise in Form einer wäßrigen Lösung zugefügt.

Nach der Zugabe des $MeNO_2$ wird zur Vervollständigung der Kupplungsreaktion zweckmäßigerweise noch 1/2 bis mehrere Stunden nachgerührt. Dabei kann man die Temperatur auch etwas ansteigen lassen.

Anschließend wird durch Zusatz von $Me^1OH$ und/oder $(Me^2)_2CO_3$, zweckmäßigerweise in Form einer wäßrigen Lösung, der pH-Wert auf 7 bis 10, vorzugsweise 7 bis 9, ganz besonders bevorzugt auf 7,5 bis 8,5, eingestellt.

Aufgrund der für Me, $Me^1$ und $Me^2$ angegebenen Bedeutungen kann das $MeNO_2$ aus Natriumnitrit oder Lithiumnitrit oder aus einem Gemisch dieser beiden Nitrite bestehen, und das $Me^1OH$ kann aus Natriumhydroxid oder Lithiumhydroxid oder aus einem Gemisch dieser beiden Hydroxide bestehen, und das $(Me^2)_2CO_3$ kann aus Natriumcarbonat oder Lithiumcarbonat oder aus einem Gemisch dieser beiden Carbonate bestehen. $MeNO_2$, $Me^1OH$ und/oder $(Me^2)_2CO_3$, d.h. die Nitrite, Hydroxide und/oder Carbonate des Natriums und/oder Lithiums können dabei selbstverständlich auch in Form ihrer Hydrate eingesetzt werden, sofern solche bekannt sind.

Die Zusammensetzungen des $MeNO_2$, $Me^1OH$ und/oder $(Me^2)_2CO_3$ werden so gewählt, daß nach der Zugabe des $Me^1OH$ und/oder $(Me^2)_2CO_3$ in der den Farbstoff enthaltenden Lösung ein Verhältnis von $Na^{\oplus}$ : $Li^{\oplus}$ = n : (2-n) vorhanden ist, wobei n eine Zahl von 0,3 bis 1,7 bedeutet.

Für die Herstellung der zweckmäßigerweise verwendeten wäßrigen Lösungen des $MeNO_2$, $Me^1OH$ und $(Me^2)_2CO_3$ wird, ebenso wie für das Reaktionsmedium, zweckmäßigerweise möglichst salzarmes Wasser, am besten destilliertes oder entsalztes Wasser, verwendet.

Nach dem Zusatz des $Me^1OH$ und/oder $(Me^2)_2CO_3$ zu der Farbstofflösung wird aus ihr Ammoniak und gegebenenfalls (noch) vorhandenes organisches Lösungsmittel abdestilliert. Das organische Lösungsmittel kann auch vor dem Zusatz des $Me^1OH$ und/oder $(Me^2)_2CO_3$ abdestilliert werden. Normalerweise wird man aber das organische Lösungsmittel zusammen mit dem Ammoniak abdestillieren, weil man dadurch einen Destillationsvorgang einsparen kann. Die Destillation kann auch unter vermindertem Druck durchgeführt werden. Sie wird beendet, wenn das in der Farbstofflösung vorhandene Ammoniak und gegebenenfalls vorhandenes organisches Lösungsmittel entfernt sind. Das abdestillierte Lösungsmittel wird zweckmäßigerweise zurückgewonnen.

Eine Abdestillation des organischen Lösungsmittels ist nicht in jedem Fall erforderlich und kann z.B. dann ganz oder zum Teil unterbleiben, wenn bei der späteren Herstellung der Schreibflüssigkeit das gleiche organische Lösungsmittel verwendet werden soll.

Die nach der Abdestillation des Ammoniaks und gegebenenfalls des vorhandenen Lösungsmittels vorliegende Farbstofflösung wird zweckmäßigerweise einer Klärfiltration in Gegenwart von Aktivkohle, Siliziumdioxid oder dgl. unterworfen. Aus der erhaltenen Lösung kann der Farbstoff der Formel I durch Trocknung, beispielsweise durch Sprühtrocknung in fester Form, gewonnen werden. Vorteilhafterweise wird jedoch die nach der Abdestillation des Ammoniaks bzw. die nach der Klärfiltration vorliegende Farbstofflösung direkt für die Herstellung von Aufzeichnungsflüssigkeiten verwendet.

Die fertigen Aufzeichnungsflüssigkeiten enthalten im allgemeinen 0,5 bis 15 Gew.% Farbstoff (trocken gerechnet), 10 bis 95 Gew.% Wasser und 0,5 bis 70 Gew.% Lösungsmittel und/oder Feuchthaltemittel. Insbesondere enthalten die fertigen Aufzeichnungsflüssigkeiten 0,5 bis 15 Gew.% Farbstoff (trocken gerechnet), 40 bis 85 Gew.% Wasser und 15 bis 50 Gew.% Lösungsmittel und/oder Feuchthaltemittel. Die fertigen Aufzeichnungsflüssigkeiten enthalten in der Regel noch weitere, nachstehend erwähnte Zusätze.

Das zur Herstellung der Aufzeichnungsflüssigkeiten benutzte Wasser wird vorzugsweise in Form von destilliertem oder entsalztem Wasser eingesetzt. Neben Wasser kann in den Aufzeichnungsflüssigkeiten auch noch ein organisches wasserlösliches Lösungsmittel oder ein Gemisch derartiger Lösungsmittel vorhanden sein. Geeignete Lösungsmittel sind z.B. ein- und mehrwertige Alkohole, deren Ether und Ester, so z.B. Alkanole, insbesondere mit 1 bis 4 C-Atomen, wie z.B. Methanol, Ethanol, Propanol, Isopropanol, Butanol, Isobutanol, tert.-Butanol; zwei- und dreiwertige Alkohole, insbesondere solche mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol; Polyalkylenglykole, wie z.B. Triethylenglykol, Polyethylenglykol, Tripropylenglykol, Polypropylenglykol; niedere Alkylether von mehrwertigen Alkoholen, wie z.B. Ethylenglykol-mono-methyl-oder -ethyl- oder -propyl- oder -butyl-ether, Diethylenglykol-mono-methyl- oder -ethyl-ether, Triethylenglykol-mono-methyl- oder ethyl-ether; Ketone und Ketoalkohole, insbesondere solche mit 3 bis 7 C-Atomen, wie z.B. Aceton, Methylethyl-keton, Diethyl-keton, Methyl-isobutyl-keton, Methylpentyl-keton, Cyclopentanon, Cyclohexanon, Diacetonalkohol; Ether, wie z.B. Dibutylether, Tetrahydrofuran, Dioxan; Ester, wie z.B. Ethylformiat, Methylformiat, Methylacetat, Ethylacetat, Propylenacetat, Butylacetat, Phenylacetat, Ethylglykol-mono-ethylether-acetat, Essigsäure-2-hydroxy-ethylester; Amide, wie z.B. Dimethylformamid, Dimethylacetamid, N-Methylpyrrolidon; ferner Harnstoff, Tetramethylharnstoff, Thiodiglykol.

Von den vorgenannten Substanzen wirken einige nicht nur als Lösungsmittel, sondern entfalten auch noch andere Eigenschaften. So wirken z.B. die mehrwertigen Alkohole auch als Feuchthaltemittel.

Weiter können den Aufzeichnungsmitteln zugesetzt sein: Konservierungsmittel, wie z.B. Phenol, kationische, anionische oder nichtionische oberflächenaktive Substanzen (Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind in der Regel zu 0 bis 10 Gew.%, vorzugsweise 0,5 bis 5 Gew.% in der Aufzeichnungsflüssigkeit vorhanden.

Angaben über Zusammensetzungen von Tinten, insbesondere auch solchen für das Strahldruckverfahren, finden sich z.B. in DE-A-2 132 324, DE-A-2 160 475, USP 4 024 096, USP 4 024 397 und USP 4 070 322. Die genaue Zusammensetzung der Aufzeichnungsflüssigkeit wird selbstverständlich dem beabsichtigten Verwendungszweck angepaßt.

Bei Aufzeichnungsflüssigkeiten für das Tintenstrahl-Druckverfahren können je nach der Ausführungsform dieses Druckverfahrens, z.B. als Continuous-jet-, Intermittent-jet-, Impulse-jet- oder Compound-jet-Verfahren gegebenenfalls noch weitere Additive, z.B. zur Pufferung des pH-Wertes, zur Einstellung der elektrischen Leitfähigkeit, der spezifischen Wärme, des thermischen Expansionskoeffizienten und der thermischen Leitfähigkeit zugesetzt werden.

Die Aufzeichnungsflüssigkeiten lassen sich in einfacher Weise durch Vermischen der Komponenten herstellen, was z.B. so erfolgen kann, daß ein Farbstoff der Formel I in Wasser gelöst oder eine bei der Herstellung des Farbstoffs der Formel I anfallende wäßrige Lösung gegebenenfalls weiter mit Wasser verdünnt wird und daß dann die übrigen Zusatzkomponenten, wie Lösungsmittel etc., zugemischt werden.

Die einen oder mehrere Farbstoffe der Formel I enthaltenden Aufzeichnungsflüssigkeiten eignen sich hervorragend zum Einsatz bei Druck-, Vervielfältigungs-, Markierungs-, Schreib-, Zeichen-, Stempel- oder Registrierverfahren, insbesondere aber auch bei dem Tintenstrahl-Druckverfahren. Dabei werden gelbe Drucke von hoher Qualität erhalten, die eine ausgezeichnete Farbwiedergabe, hohe Brillanz und Schärfe und gute Wasser-, Licht- und Abriebfestigkeit besitzen. Die Aufzeichnungsflüssigkeiten eignen sich auch hervorragend für den Mehrfarbendruck. Bei der Lagerung erfindungsgemäßer Tinten tritt keine oder nur minimale Abscheidung von Niederschlägen auf. Beim Tintenstrahldruck zeichnen sich erfindungsgemäße Tinten durch eine geringe Neigung zur Verstopfung der Düsen aus. Es treten auch keine Änderungen der physikalischen Eigenschaften erfindungsgemäßer Tinten ein, wenn sie in einem Tintenstrahldrucker längere Zeit unter ständiger Rezirkulation oder intermittierend unter zwischenzeitiger Abschaltung des Tintenstrahldruckers angewandt werden.

Im Vergleich zu den in der deutschen Patentschrift 2 821 350 beschriebenen Farbstoffen weisen die erfindungsgemäßen gemischten Natrium-/Lithium-Salze der Formel I eine bessere pH-Stabilität und Löslichkeit auf, ferner zeichnen sich die aus den erfindungsgemäßen Farbstoffen hergestellten Aufzeichnungsflüssigkeiten durch eine höhere Oberflächenspannung und bessere Lagerstabilität aus.

Beispiel 1

Eine Mischung von 320 g 2-(4′-Aminophenyl)-6-methylbenzthiazol-7-sulfosäure und 318 g 1-Acetoacetylamino-2-methoxy-5-methylbenzol-4-sulfosaures Ammonium werden in eine Mischung von 2 l entsalztem Wasser und 2 l 96%iges Ethanol eingetragen, auf 15 °C gekühlt und mit einer Lösung von 69,2 g Natriumnitrit in 300 ml entsalztem Wasser versetzt.

Man rührt 4 h bei einer Temperatur von 30 bis 40 °C, stellt mit einer Lösung von 53,0 g Lithiumhydroxid-monohydrat in 320 ml entsalztem Wasser auf pH 8 und destilliert wäßriges Ethanol bis zu einem Siedepunkt von 100 °C ab. Man erhält 2720 g einer gelben Farbstofflösung, aus der durch Eindampfen bei 80 °C im Umlufttrockenschrank 713,2 g eines gelben, salzarmen Farbstoffs der Formel

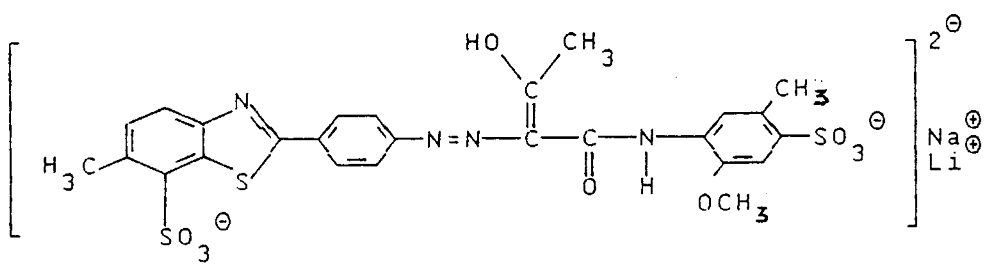

erhalten werden. Dieser Farbstoff entspricht einem Farbstoff der Formel I mit n = 1.
λmax: 395 µm.

Beispiel 2

Verfährt man nach den Angaben des Beispiels 1, setzt jedoch statt 320 g 2-(4′-Aminophenyl)-6-methylbenzthiazol-7-sulfosäure 454 g 2-(4′-Aminophenyl)-6-(6″-methyl-benzthiazolyl(2″))-benzthiazol-7″-sulfosäure (Primulinsäure) ein (pH-Wert nach dem Zusatz Lithiumhydroxids-monohydrats : 8,5 - 9), so erhält man nach Trocknung 771 g eines salzarmen Farbstoffs der Formel I
mit $R^1$ =

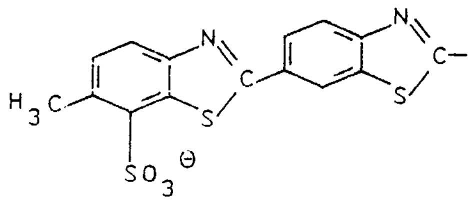

$R^2$ = Methyl, $R^3$ = Methyl und n = 1.
λmax: 410 µm.

Beispiel 3

Verfährt man nach den Angaben des Beispiels 1, setzt jedoch statt 69,2 g Natriumnitrit eine Lösung von 71 g Lithiumnitrit-monohydrat und statt 53,6 g Lithiumhydroxid-monohydrat ein Gemisch von 12 g Natriumhydroxid und 29,3 g Lithiumhydroxid-monohydrat ein, wodurch ein pH-Wert von 8 bis 8,5 eingestellt wird, so erhält man den Monoazofarbstoff des Beispiels 1, jedoch mit n = 0,3, d.h. mit einem Anteil von 1,7 $Li^{⊕}$ und 0,3 $Na^{⊕}$.

Beispiel 4

Verfährt man nach den Angaben des Beispiels 1, setzt jedoch bei der Neutralisation statt 53,6 g Lithiumhydroxid-monohydrat ein Gemisch von 12,6 g Lithiumhydroxid-monohydrat und 32 g Natriumhydroxid ein, wodurch ein pH-Wert von 8 bis 8,5 eingestellt wird, so erhält man den Monoazofarbstoff des Beispiels 1, jedoch mit n = 1,7, d.h. mit einem Anteil von 0,3 $Li^{⊕}$ und 1,7 $Na^{⊕}$.

Der folgenden Tabelle ist der strukturelle Aufbau weiterer Monoazofarbstoffe zu entnehmen, die entsprechend den Angaben des Beispiels 1 hergestellt werden können:

Farbstoff der Formel I

| Beispiel | $R^1$ | $R^2$ | $R^3$ | n | λmax (µm |
|---|---|---|---|---|---|
| 5 | 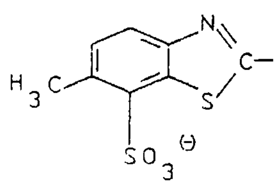 | $-CH_3$ | $-C_2H_5$ | 1 | 396 |
| 6 | 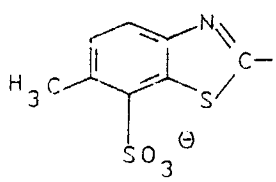 | $-OCH_3$ | $-CH_3$ | 1 | 416 |

Beispiel 7

Zur Prüfung der Lichtechtheit, Wasserechtheit und Thermostabilität der erfindungsgemäßen Aufzeichnungsflüssigkeiten im Vergleich zu Aufzeichnungsflüssigkeiten mit bekannten gelben Farbstoffen werden verschiedene Tinten gemäß folgender Rezeptur hergestellt:
4 Gew.% Farbstoff,
4 Gew.% Triethanolamin,
77 Gew.% Wasser (destilliert),

15 Gew.% Diethylenglykol
und wie folgt geprüft:

1. Bestimmung der Wasserechtheit

50 ml der 4%igen Tinte werden in eine Porzellanabdampfschale gegossen. Ein Filterpapierstreifen Nr.2290 der Fa. Schleicher und Schüll wird innerhalb von 5 s durch die Lösung gezogen. Diese so erhaltene Papiertauchfärbung wird 24 h getrocknet. Die Farbstärke dieser Papiertauchfärbung wird als $F_0$ bezeichnet und mit einem Spectrogard Spektralphotometer der Fa. Scientific bestimmt. Zur Bestimmung der Wasserechtheit wird die oben erhaltene Papiertauchfärbung 15 s in Wasser getaucht, getrocknet und damit die Farbstärke $F_{15}$ bestimmt.

Der Farbstoffverlust wird mit der Formel

$F_0$ - $F_{15}$ / $F_0$ x 100 (%)

berechnet. Gute Wasserechtheiten haben einen Farbstärkeverlust von -10 bis -20 %.

2. Bestimmung der Thermostabilität

Ein Teil der 4%igen Tinte wird 4 Tage bei 90 °C in einem geschlossenen Gefäß gelagert. Gemessen wird nun die Farbtonabweichung der beiden Lösungen im L* a* b* - Farbraum nach DIN 6174. Die Farbtonabweichung wird in Δ E-Einheiten angegeben. Ein Δ E-Wert 1 wird in der Regel von einem ungeschulten Beobachter nicht mehr als Farbtonabweichung wahrgenommen.

Die bei den vorstehend genannten Prüfungen erhaltenen Ergebnisse sind in der folgenden Tabelle zusammengefaßt:

Tabelle

| Farbstoff | Wasserechtheit in % | Thermostabilität Δ E |
|---|---|---|
| gemäß Beispiel 1 | -21 | 0.8 |
| Acid Yellow 245 | -65 | 0,35 |
| Acid Yellow 23 | -58 | 0,9 |
| Reactive Yellow 37 | -51 | 0,5 |
| Direct Yellow 44 | -28 | 7,76 |

Die in der Tabelle angegebenen Werte zeigen, daß der erfindungsgemäße Farbstoff der Formel I gegenüber den anderen Säure-, Reaktiv- und Direktfarbstoffen eine gute bis sehr gute Verbesserung der Wasserechtheit sowie eine gute Thermostabilität besitzt.

Die unter Verwendung des Farbstoffs gemäß Beispiel 1 nach der angegebenen Rezeptur hergestellte Tinte besitzt einen pH-Wert von 8,5 und eignet sich insbesondere als Aufzeichnungsflüssigkeit für das Tintenstrahldruckverfahren.

## Patentansprüche

**1.** Wasserlösliche gelbe Monoazofarbstoffe der Formel I

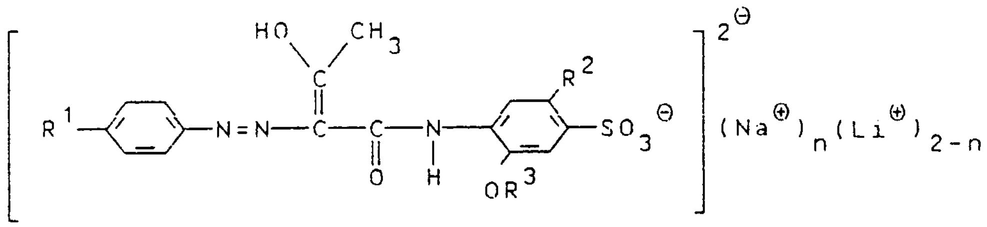

(I)

worin
$R^1$
den Rest

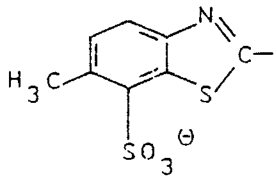

oder den Rest

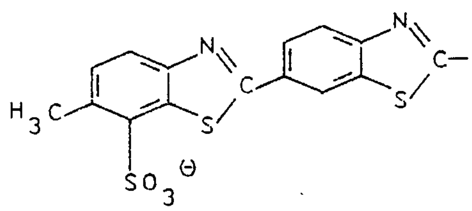

$R^2$ Methyl, Ethyl, Methoxy oder Ethoxy,
$R^3$ Methyl oder Ethyl,
n eine Zahl von 0,3 bis 1,7
bedeuten.

**2.** Monoazofarbstoffe nach Anspruch 1, dadurch gekennzeichnet, daß
$R^1$

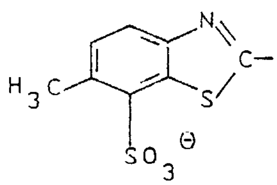

$R^2$ Methyl und $R^3$ Methyl bedeuten.

**3.** Monoazofarbstoffe nach Anspruch 1 und/oder 2, dadurch gekennzeichnet, daß n die Zahl 1 bedeutet.

**4.** Verfahren zur Herstellung der in einem oder mehreren der Ansprüche 1 bis 3 angegebenen Monoazofarbstoffe der Formel I, dadurch gekennzeichnet, daß im wäßrigen Medium eine Diazokomponente der allgemeinen Formel II

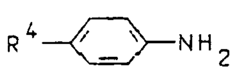

(II)

worin
$R^4$ den Rest

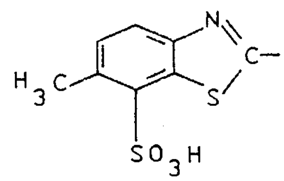

oder den Rest

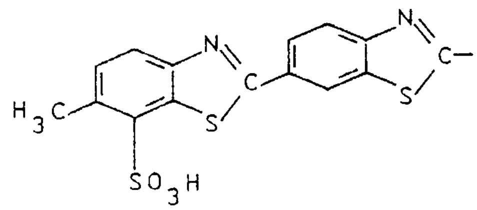

bedeutet, durch Zugabe von $MeNO_2$, wobei Me Na oder Li oder ein Gemisch aus Na und Li bedeutet, diazotiert und auf eine Kupplungskomponente der allgemeinen Formel III

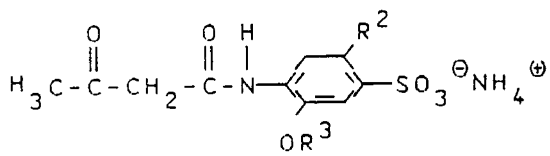 (III)

worin $R^2$ und $R^3$ die in Anspruch 1 und/oder 2 angegebenen Bedeutungen besitzen, gekuppelt wird und daß anschließend in der Lösung mit $Me^1OH$ und/oder $(Me^2)_2CO_3$, wobei $Me^1$ und $Me^2$ Na oder Li oder ein Gemisch aus Na und Li bedeuten, ein pH-Wert von 7 bis 10 eingestellt wird, wobei die Zusammensetzungen des $MeNO_2$, $Me^1OH$ und/oder $(Me^2)_2CO_3$ so gewählt werden, daß nach der Zugabe des $Me^1OH$ und/oder $(Me^2)_2CO_3$ in der den Farbstoff enthaltenden Lösung ein Verhältnis von $Na^{\oplus} : Li^{\oplus} = n : (2-n)$, wobei n eine Zahl von 0,3 bis 1,7 bedeutet, vorliegt, und dann der in der Lösung vorhandene Ammoniak durch Destillation entfernt wird.

**5.** Verfahren nach Anspruch 4, dadurch gekennzeichnet, daß als wäßriges Reaktionsmedium Wasser im Gemisch mit einem leicht regenerierbaren Alkohol, insbesondere Methanol, Ethanol und/oder Isopropanol verwendet wird und der Alkohol aus dem Reaktionsmedium vor oder nach der Zugabe des $Me^1OH$ und/oder $(Me^2)_2CO_3$ abdestilliert wird.

**6.** Verfahren nach Anspurch 4 und/oder 5, dadurch gekennzeichnet, daß nach der Kupplung in der Lösung ein pH Wert von 7 bis 9 eingestellt wird.

**7.** Verfahren nach Anspruch 4 und/oder 5, dadurch gekennzeichnet, daß nach der Kupplung in der Lösung ein pH Wert von 7,5 bis 8,5 eingestellt wird.

**8.** Verwendung der in einem oder mehreren der Ansprüche 1 bis 3 angegebenen Farbstoffe der Formel I zur Herstellung von Aufzeichnungsflüssigkeiten.

**9.** Aufzeichnungsflüssigkeit enthaltend
0,5 bis 15 Gew.% Farbstoff der in einem oder mehreren der Ansprüche 1 bis 3 angegebenen Formel I,
10 bis 95 Gew.% Wasser,
0,5 bis 70 Gew.% Lösungsmittel und/oder Feuchthaltemittel.

**10.** Aufzeichnungsflüssigkeit nach Anspruch 9 enthaltend
0,5 bis 15 Gew.% Farbstoff,
40 bis 85 Gew.% Wasser,
15 bis 50 Gew.% Lösungsmittel und/oder

Feuchthaltemittel.

## Claims

1. Water soluble yellow monoazo dyestuffs of the formula I

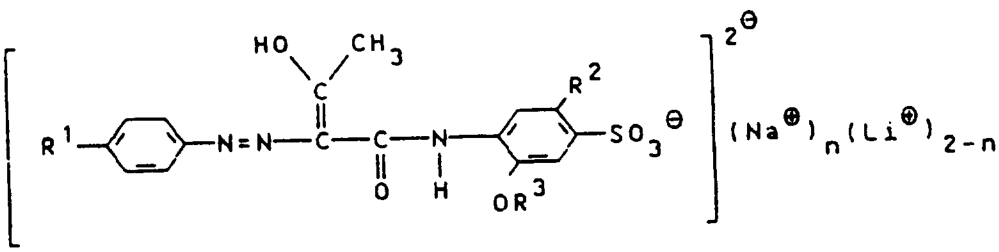

(I)

wherein $R^1$ denotes the radical

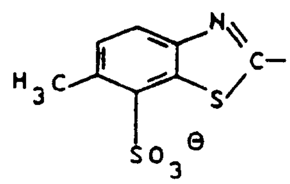

or the radical

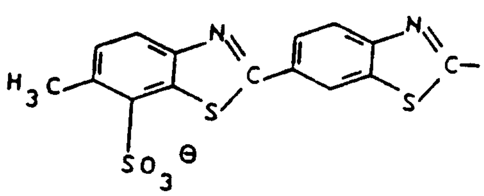

$R^2$ denotes methyl, ethyl, methoxy or ethoxy,
$R^3$ denotes methyl or ethyl and
n denotes a number from 0.3 to 1.7.

2. Monoazo dyestuffs according to claim 1, characterized in that $R^1$ denotes

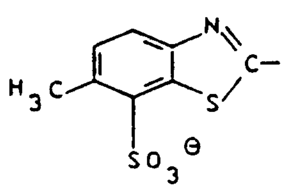

$R^2$ denotes methyl and $R^3$ denotes methyl.

3. Monoazo dyestuffS according to claim 1 and/or 2, characterized in that n denotes the number 1.

4. Process for the preparation of the monoazo dyestuffs of the formula I indicated in one or more of claims 1 to 3, characterized in that a diazo component of the general formula II

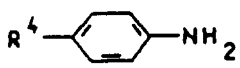

(II)

wherein $R^4$ denotes the radical

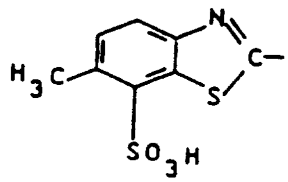

or the radical

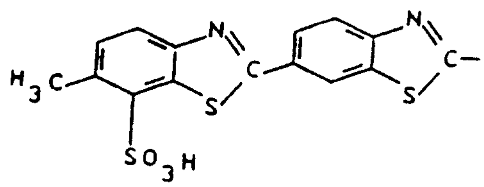

is diazotized, in an aqueous medium, by the addition of $MeNO_2$ in which Me denotes Ha or Li or a mixture of Na and Li, and the product is coupled with a coupling component of the general formula III

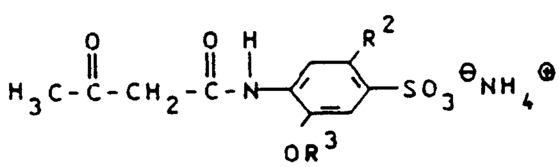

(III)

wherein $R^2$ and $R^3$ have the meanings indicated in claim 1 and/or 2 and the pH of the solution is then adjusted to a value of 7 to 10 by means of $Me^1OH$ and/or $(Me^2)_2CO_3$, in which $Me^1$ and $Me^2$ denote Na or Li or a mixture of Na and Li, the compositions of $MeNO_2$, $Me^1OH$ and/or $(Me^2)_2CO_3$ being so chosen that, after the addition of the $Me^1OH$ and/or $(Me^2)_2CO_3$, an $Na^{\oplus}$ : $Li^{\oplus}$ ratio of n:(2-n), n denoting a number of 0.3 to 1.7, exists in the solution containing the dyestuff, and the ammonia present in the solution is then removed by distillation.

**5.** Process according to claim 4, characterized in that the aqueous reaction medium used is water mixed with a readily recoverable alcohol, in particular methanol, ethanol and/or isopropanol and the alcohol is removed by distillation from the reaction medium before or after the addition of the $Me^1OH$ and/or $(Me^2)_2CO_3$.

**6.** Process according to claim 4 and/or 5, characterized in that the pH of the solution is adjusted to a value of 7 to 9 after the coupling.

**7.** Process according to claim 4 and/or 5, characterized in that the pH of the solution is adjusted to a value of 7.5 to 8.5 after the coupling.

**8.** The use of the dyestuffs of the formula I indicated in one or more of claims 1 to 3 for the preparation of recording fluids.

**9.** Recording fluid consisting of 0.5 to 15% by weight of dyestuff of the formula I indicated in one or more of claims 1 to 3, 10 to 95% by weight of water and 0.5 to 70% by weight of solvent and/or humectant.

**10.** Recording fluid according to claim 9, containing 0.5 to 15% by weight of dyestuff, 40 to 85% by weight of water and 15 to 50% by weight of solvent and/or humectant.

**Revendications**

**1.** Colorants monoazoïques jaunes solubles dans l'eau répondant à la formule I :

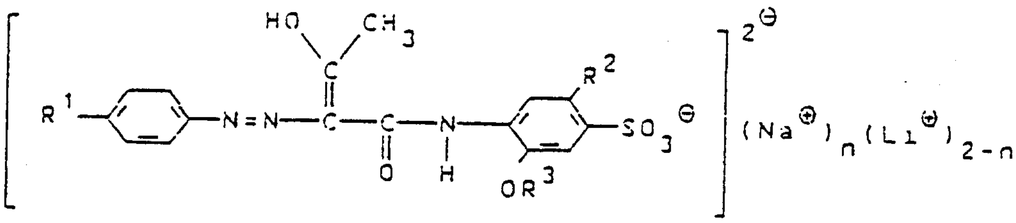

(I)

dans laquelle
$R^1$ désigne le radical

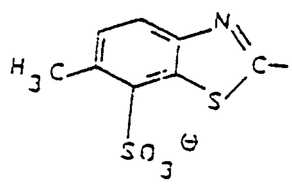

ou le radical

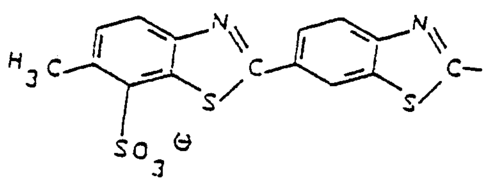

$R^2$ est un groupe méthyle, éthyle, méthoxy ou éthoxy,
$R^3$ est un groupe méthyle ou éthyle,
n est un nombre de 0,3 à 1,7.

**2.** Colorants monoazoïques répondant à la formule I, caractérisés en ce que
$R^1$ désigne un groupe

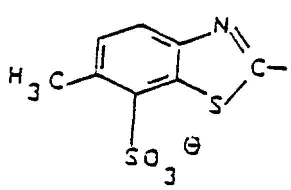

$R^2$ désigne un groupe méthyle et $R^3$ un groupe méthyle.

**3.** Colorants monoazoïques selon les revendications 1 et/ou 2, caractérisés en ce que n désigne le nombre 1.

4. Procédé de préparation des colorants monoazoïques répondant à la formule I indiqués dans une ou plusieurs des revendications 1 à 3, caractérisé en ce qu'on diazote en milieu aqueux un constituant diazoïque répondant à la formule générale II :

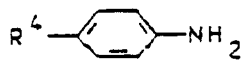

(II)

dans laquelle $R^4$ désigne le radical

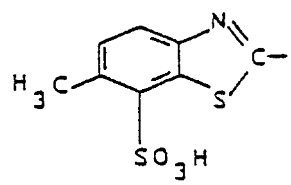

ou le radical

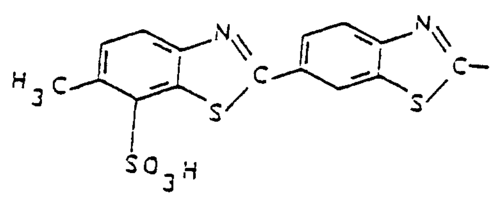

par addition de $MeNO_2$, Me désignant Na ou Li, ou un mélange de Na et Li, et en ce qu'on le copule sur un constituant de copulation répondant à la formule générale III :

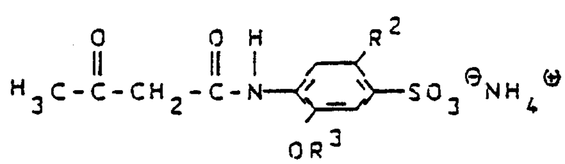

(III)

dans laquelle $R^2$ et $R^3$ ont les significations indiquées dans les revendications 1 et/ou 2, puis en ce qu'on ajuste dans la solution un pH de 7 à 10 avec $Me^1OH$ et/ou $(Me^2)_2CO_3$, $Me^1$ et $Me^2$ désignant Na ou Li ou un mélange de Na et Li, les compositions de $MeNO_2$, $Me^1OH$ et/ou $(Me^2)_2CO_3$ étant choisies de telle sorte qu'après l'addition du $Me^1OH$ et/ou du $(Me^2)_2CO_3$ dans la solution contenant le colorant, on ait un rapport $Na^{\oplus}$ : $Li^{\oplus}$ = n : (2-n), n désignant un nombre de 0,3 à 1,7, puis on élimine par distillation l'ammoniac présent dans la solution.

5. Procédé selon la revendication 4, caractérisé en ce qu'on utilise comme milieu réactionnel aqueux de l'eau en mélange avec un alcool aisément régénérable, en particulier le méthanol, l'éthanol et/ou l'isopropanol, et en ce qu'on élimine l'alcool du mélange réactionnel par distillation avant ou après l'addition du $Me^1OH$ et/ou du $(Me^2)_2CO_3$.

6. Procédé selon les revendications 4 et/ou 5, caractérisé en ce qu'après la copulation, on ajuste dans la solution un pH de 7 à 9.

7. Procédé selon les revendications 4 et/ou 5, caractérisé en ce qu'après la copulation, on ajuste dans la solution un pH de 7,5 à 8,5.

**8.** Utilisation des colorants répondant à la formule I indiqués dans une plusieurs des revendications 1 à 3, pour la préparation de liquides d'enregistrement.

**9.** Liquide d'enregistrement contenant 0,5 à 15 % en poids d'un colorant répondant à la formule I indiquée dans une ou plusieurs des revendications 1 à 3, 10 à 95 % en poids d'eau, 0,5 à 70 % en poids de solvant et/ou d'humidifiant.

**10.** Liquide d'enregistrement selon la revendication 9, contenant 0,5 à 15 % en poids de colorant, 40 à 85 % en poids d'eau, 15 à 50 % en poids de solvant et/ou d'humidifiant.